# EUROPEAN PATENT APPLICATION

(11) **EP 1 081 568 A2**
(43) Date of publication of application: **07.03.2001**
(21) Application number: 00118426.6
(22) Date of filing: 24.08.2000
(51) Int. Cl.: G05B 19/409, G05B 19/042

(54) **Mechanism control system and its developing method**

(30) Priority: 06.09.1999 JP 25192899
(71) Applicant: KABUSHIKI KAISHA TOSHIBA, Kawasaki-shi (JP)
(72) Inventor: Otsuka, Toru, 1-1 Shibaura 1-chome Minato-ku Tokyo 105 (JP)
(74) Representative: Blumbach, Kramer & Partner GbR

(57) **Abstract**

The present invention is directed to a mechanism control system for controlling the operation of a to-be-controlled mechanism in a predetermined control sequence and has a display (10) for displaying an operation image screen, an operation unit (11) for selecting desired elements of control elements in the mechanism defined as a control block and structuring script and representing an operation sequence of the mechanism, and a CPU (2) for controlling the operation of the mechanism on the basis of the control sequence.

## Description

The present invention relates to a mechanism control system comprising a main control section and unit control sections each having a sensor, an actuator and the like connected to it. The invention also relates to a method of developing the mechanism control system.

Various techniques have been disclosed about a medium conveying apparatus which have a number of sensors for detecting the positions, states and the like media (e.g., sheets) which is designed to convey and control the media.

The mechanism control system provided in such a medium conveying apparatus holds a program written in, for example, assembler language, describes the sequence of operations of a mechanism.

The user of the mechanism control system has no knowledge about a program development cannot describe the sequence of operations if he or she has no knowledge of program language. Even if the user has some knowledge about program writing, it will take him or her a lot of time and labor to wrote the program.

Further, most mechanism designers have no knowledge of program writing and cannot write programs for controlling mechanisms. It is difficult for them to determine quickly and accurately whether or not a program controls a mechanism as desired.

The present invention has been achieved in consideration of the foregoing. The object of the invention is to provide a mechanism control system which can easily describe and execute the operation of the mechanism simply by arranging, on an image screen, control blocks representing operations, and to provide a method of developing the mechanism control system.

To achieve the above-mentioned object, a mechanism control system according to the first aspect of the invention is designed to control the operation of a mechanism in a predetermined sequence. The system comprises: display means for displaying a predetermined operation image screen; operation designating means for selecting any desired one of predefined control elements of the mechanism which are displayed on the operation image screen of the display means and which represent a sequence of controlling the mechanism; and control means for controlling the operation of the mechanism in the sequence of controlling the mechanism.

A mechanism control system according to the second aspect of the invention is one for controlling the operation of a mechanism in a predetermined control sequence. This system comprises: block-column constructing means for selecting desired blocks form a plurality of control-describing blocks and constructing a column of blocks; designating means for designating control contents of the control-describing blocks; and state-holding means for holding any block included in the column of blocks that need to be executed. In the mechanism control system, the control content corresponding to the block held in the state-holding means is executed and then changed in accordance with a result of the execution, thereby to perform a desired control sequence.

A method of developing a mechanism control system, according to the third aspect of the invention, is designed to control the operation of a mechanism in a predetermined control sequence. The method comprises the steps of: displaying a predetermined operation image screen; selecting desired ones of the elements provided in the mechanism, which are represented as blocks, and constructing a column of blocks that represents a sequence of controlling the mechanism; and controlling the mechanism in the sequence represented by the column of blocks.

A method of developing a mechanism control system, according to the fourth aspect of the invention, is designed to control the operation of a mechanism in a predetermined control sequence. The method comprises the steps of: selecting elements to be controlled; designating control contents of the elements selected; inputting predetermined parameters to designate details of the control contents designated; and generating a sequence of control for operating the elements selected, in accordance with the control contents and parameters designated.

A method of developing a mechanism control system, according to the fifth aspect of this invention, is designed to control the operation of a mechanism in a predetermined control sequence. The method comprises the steps of: selecting desired ones of a plurality of control blocks and constructing a column of blocks; designating control contents of the control blocks; holding any control block included in those held, that is to be executed; and executing the control content corresponding to the control block held and changing the content block held to one to be executed, thereby to generate a control sequence of a desired operation.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a conceptual view showing a mechanism control system of the present invention;
FIGS. 2A and 2B are views showing, in more detail, an arrangement of the mechanism control system of the present invention;
FIG. 3 is a view showing an operation description image screen;
FIG. 4 is a view showing, in more detail, one example of a setting image screen of a trapezoid drive control block used in 1-10, etc, in FIG. 3;
FIG. 5 is a view showing a combination of a plurality of blocks in the trapezoid drive control block;
FIG. 6 is a detailed view showing one example of a setting image screen of a condition wait control block used in 1-20, etc., in FIG. 3;
FIG. 7 is a view showing a practical example of a condition branch control block;
FIG. 8 is a view showing a setting image screen of the condition branch control block;
FIG. 9 is a view showing one example of a setting image screen of an output port operation control block used in the block 1-20, etc., in FIG. 7;
FIG. 10 is a view showing a control block retaining structure;
FIG. 11 is a view showing a operation description column status array status [];
FIG. 12 is a flowchart showing control block entire processing;
FIG. 13 is a flowchart showing a flow of motor operation parameter control block processing performed at step S4 in FIG. 12;
FIG. 14 is a flowchart showing a flow of motor operation start control block processing performed at step S4 in FIG. 12;
FIG. 15 is a flowchart showing a flow of motor operation stop control block processing performed at step S5 in FIG. 12;
FIG. 16 is a flowchart showing a flow of condition wait control block processing performed at step S7 in FIG. 12;
FIG. 17 is a flowchart showing a flow of condition branch control block processing performed at step S8 in FIG. 12; and
FIG. 18 is a flowchart showing a flow of an output port operation control block processing performed at step S9 in FIG. 12.

An embodiment of the present invention will be described, with reference to the accompanying drawing.

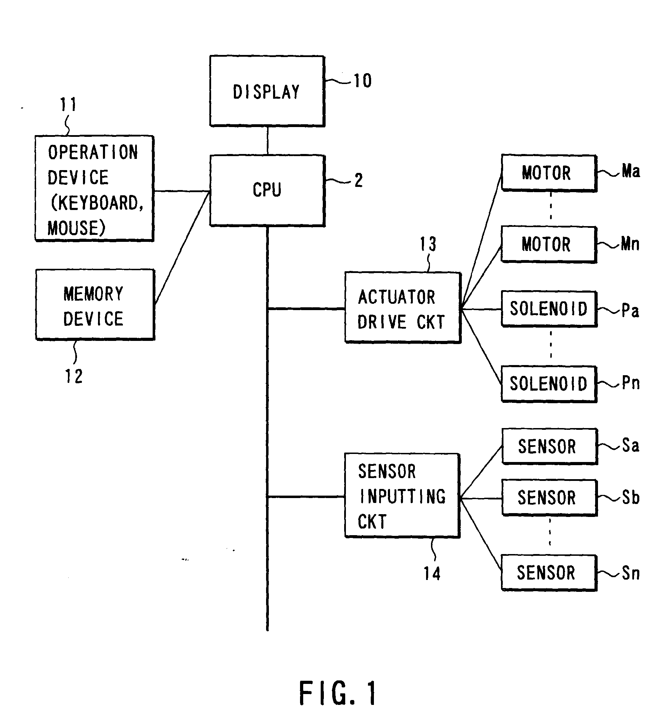

FIG. 1 is a conceptual view of a mechanism control system of the present invention.

As shown in FIG. 1, a display 10, operation device 11 such as a keyboard and mouse, and memory device 12, such as an FD and MO, are electrically connected to a CPU 2 to be controlled by the CPU 2. The CPU 2 is connected by a bus to an actuator drive circuit 13 and sensor input circuit 14. Motors Ma to Mn and solenoids Pa to Pn are connected to the actuator drive circuit 13. Sensors Sa to Sn are connected to the sensor input circuit 14.

The mechanism control system of this invention, thus constructed, adopts a method of describing mechanism control. In the method, a plurality of control blocks are displayed on a predetermined screen area of the display 10. The control blocks are arranged in one script(See below for further details), representing an operation sequence of the individual actuators. Each control block defines a control element such as a start and stop of each actuator (motors Ma to Mn, solenoids Pa to Pn).

A parameter setting screen can be displayed, by double-clicking the mouse. The parameter display setting screen enables the further description of the actuator operation content.

Further, the operations of a plurality of actuators (motors Ma to Mn, solenoids Pa to Pn) are represented by the respective setting individual script. A linkage relation between the respective actuators is represented by a control block linking operation on the screen. Thus, any complex linking operation performed by the actuators can be described easily.

Moreover, the mechanism control system requires but a small number of wires. This is because some parts of a monitor device are provided at the CPU 2. This is because, while the others parts are provided at sensor Sa to Sn, and operation control data is multiplexed and transmitted between the CPU 2, on the one hand, and the actuator (motors Ma to Mn, solenoids Pa to Pn), on the other hand. Further, a serial circuit line is used to transmit both sensor information and sensor circuit control information, and the number of such serial circuit lines required is thereby reduced.

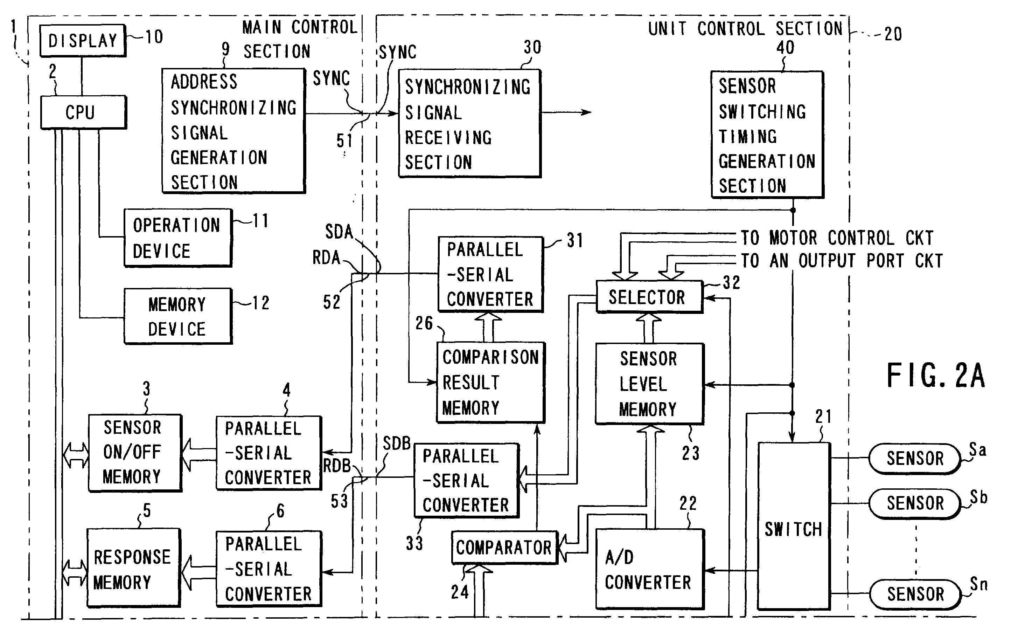

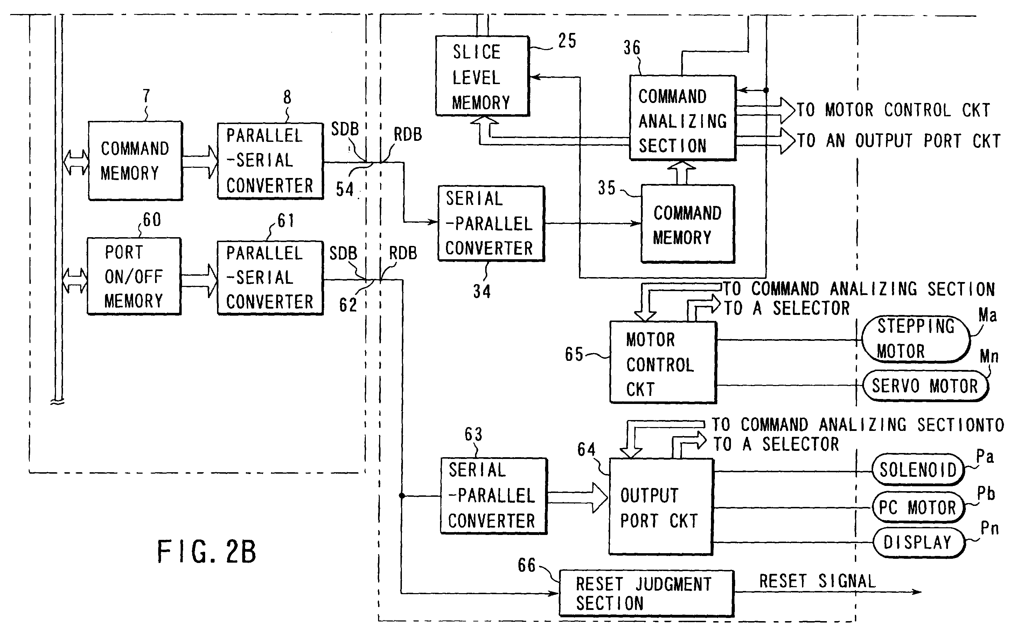

The mechanism control system will be described in more detail, with reference to FIGS. 2A and 2B.

As shown in FIGS. 2A and 2B, a main control section 1 includes the CPU 2, i.e., central processing unit. A sensor ON/OFF memory 3, response memory 5, command memory 7 and port ON/OFF memory 60 are connected to the CPU. A display 10, an operation device 11 such as a keyboard or a mouse, and a memory device 12 such as an FD or an MO are also electrically connected to the CPU 2.

The sensor ON/OFF memory 3 is connected to a serial-parallel converter 4, which is connected to a serial circuit line 52. The response memory 5 is connected to a serial-parallel converter 6, which is connected to a serial circuit line 53.

The command memory 7 is connected to a parallel-to-serial circuit 8, which is connected to a serial circuit line 54. The port ON/OFF memory 60 is connected to a parallel-serial converter 61, which is connected to a serial circuit line 62.

The main control section 1 has an address synchronizing signal generation section 9. The section 9 is connected to a serial circuit line 51.

The unit control section 20 includes a switch 21, to which a plurality of sensors Sa, Sb, ..., Sn are connected.

In response to a timing signal supplied from a sensor switching timing generation section 40, the switch 21 repeats a time-division scanning, selects sensor signals, and outputs sensor signals sequentially.

The level of each sensor signal selected by the switch 21 is converted to digital data. The digital data, or sensor level data, is held in a sensor level memory 23. The sensor level data is supplied to a comparator 24, when necessary. The comparator 24 compares the sensor level data with a plurality of slice levels initially stored in the slice level memory 25. A respective result of comparison is stored into a comparison result memory 26.

In response to the timing signal supplied from the sensor switching timing generation section 40, the slice level memory 25 sequentially outputs the slice levels which correspond to the respective sensors, in synchronism with the scanning of the switch 21.

The results of comparison, held in the comparison result memory 26, are sequentially output in accordance with a timing signal (not shown), independent of the sensor scanning. A parallel-serial converter 31 converts the results to a serial signal. The serial signal is transmitted via the serial circuit line 52 to the serial-parallel converter 4 provided in the main control section 1.

The respective sensor level data in the sensor level memory 23 is sequentially read out in accordance with a timing signal (not shown), independent of the sensor scanning and, after a selector 32 selects the data in response to an instruction from a later-described command analyzing section 36. A parallel-serial converter 33 converts the data to a serial signal. The serial signal is transmitted via the serial circuit line 53 to the serial-parallel converter 6 provided in the main control section 1.

The serial-parallel converter 34 receives a command which transmitted via the serial circuit 54 from the parallel-serial converter 8 of the main control section 1 and converts the command to a parallel command. The parallel command is held in a command memory 35. A command analyzing section 36 analyzes the content held in the memory 35.

Having analyzed the command stored in the command memory 35, the command analyzing section 36 delivers an instruction to the selector 32. In response to the instruction, the selector 32 selects the sensor level data held in the sensor level memory 23. The data selected is transmitted to the main control section 1.

The selector 32 selectively outputs any data read from the sensor level memory 23 and the command supplied from the command analyzing section 36, i.e., a send-back command for echo-back checking, in response to the instruction delivered from the command analyzing section 36. The command analyzing section 36 analyzes slice levels from a predetermined command stored in the command memory 35 and writes the slice levels into the slice level memory 25. Further, upon receipt of the command from the main control section 1, the command analyzing section 36 delivers a command of the same content as the received one promptly back. The command is supplied to the main control section 1 through the selector 32 and parallel-serial converter 33.

A synchronizing signal receiving section 30 shown in FIGS. 2A and 2B is connected to the address synchronizing signal generation section 9 provided in the main control section 1, by the serial circuit line 51. The section 30 can therefore receive a synchronizing signal from the address synchronizing signal generation section 9.

The operation of the motor control circuit 65 will be described.

A motor control circuit 65 is controlled by receiving parameters of an initial speed, maximum speed, acceleration rate, deceleration rate, operation amount, etc., of the motor and by various commands such as the start, stop, etc., of an operation. The CPU 2 writes the parameters and commands into the command memory 7. These parameters and commands will be transmitted to the motor control circuit 65.

The parallel-serial converter 61 converts the content of the port ON/OFF memory 60 to a serial one. The serial content is transmitted to a serial-parallel converter 63 through a serial circuit 62. The "parallel" parameter and command from the serial-parallel converter 63 are written into the command memory 35. The command analyzing section 36 analyzes their contents in the same way as a sensor circuit control command (sensor level read, slice level setting command). If necessary, the parameter and command are transmitted to the motor control circuit 65.

The motor control circuit 65 operates in accordance with the parameter and command thus transmitted. If the parameter and command demand the sending-back of a result of operation, the operation result is transmitted to the selector 32.

At the same time, the command analyzing section 36 controls the selector 32. The result of operation is sent from the motor control circuit 65 to the parallel-serial converter 33. The result is stored into the response memory 5 so as to be read out by the CPU 2.

The operation of an output port circuit 64 will be described.

The CPU 2 writes "1" in the port ON/OFF memory 60 at an address corresponding to an output port of the memory 60, to turn on this output port. The CPU 2 writes "0" in the memory 60 at an area corresponding to an output port, to turn off the output port. The parallel-serial converter 61 converts the content of the port ON/OFF memory 60 to a "serial" content. The serial content is transmitted to the serial-parallel converter 63 via a serial circuit 62. The output port circuit 64 reads the "parallel" output port ON/OFF information supplied from the serial-parallel converter 63. In accordance with the output port ON/OFF information, the circuit 64 sets an output of a predetermined port. As in the above-mentioned motor control circuit 65, the result operation is transmitted to the response memory 5 if a result of operation is necessary.

An operation description method (developing method) that the mechanism control system of the invention performs will be described with reference to the drawing.

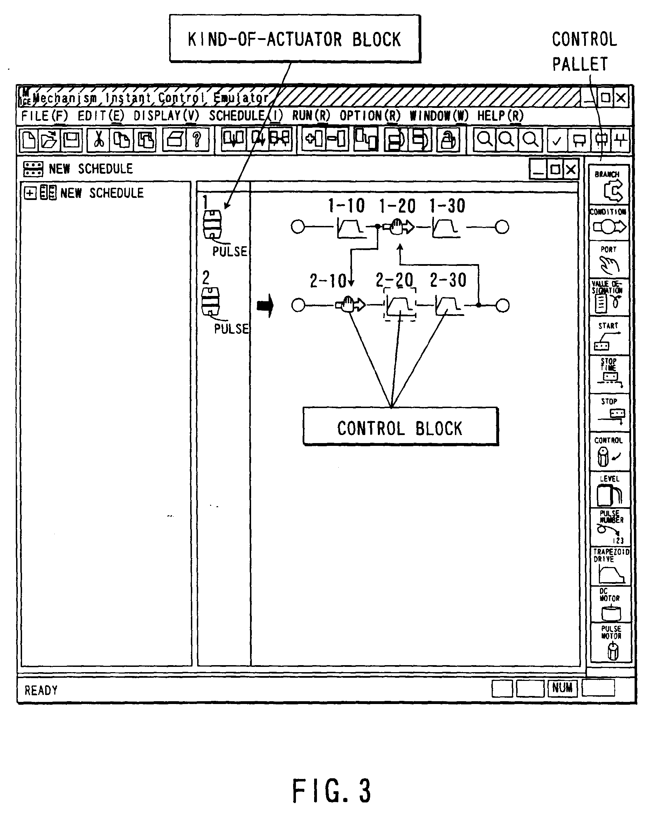

FIG. 3 shows an operation description screen.

As shown in FIG. 3, a plurality of operation description blocks (hereafter, referred to as "control blocks") are displayed on the right half of the operation description screen.

With regard to control blocks, the word "branch" means a condition branch control block and is used to select the control contents by a condition. The word "condition" means a condition control wait block and is used in the case where the execution of a "script" is suspended until a specific condition is satisfied.

It should be noted that the word "script" means a "row" in FIG. 3.

The word "port" means an output port operation control block and is used to select any output port in the form a "unit control section's address (ISC number) + port number" and designate an ON/OFF.

The term "value setting" means a motor operation parameter control block and is used to set the operation parameter of a stepping motor.

The word "start" means a motor operation start control block and is used to designate a start of the stepping motor. The term "wait for stop" means a motor operation wait control block and is used to wait for the stop of the stepping motor when the motor is open-loop controlled. The word "stop" means a motor operation stop control block and is used to stop the stepping motor. The word "control" means a motor operation control block and is used to issue any motor control command. The word "level" means a sensor level obtaining control block and is used in the case where, if the sensor level obtaining control block is described in the script, then, upon execution, the analog levels of all the sensors at that time are recorded in the memory.

"Pulse number" means a pulse obtaining control block and is use to obtain the number of pulses actually operating immediately before the stepping motor operates. The term "trapezoid drive" means a trapezoid drive control block and is used for a general trapezoid drive (The DC motor is started and then linearly accelerated. Thereafter, the DC motor is driven at a constant speed for some time. Further, the DC motor is linearly decelerated and stopped.). The term "DC motor" means a DC motor operation control block and is used to add the general pattern of the DC motor operation. The term "pulse motor" means a stepping motor operation control block and is used to add the general pattern of the stepping motor operation.

Each control block is added to a corresponding script by selecting a button representing a desired control, when a mouse clicking is made on a control pallet, etc., while a script to be described remains in a selected state (selected row is arrow-displayed).

The script thus prepared by the controls shown at the right sides of the kinds-of-actuators block shows the control contents of a corresponding actuator.

In the script shown at a first row in FIG. 3, for example, the control blocks 1-10, 1-20 and 1-30 are sequentially executed.

The condition wait control block 2-10 in FIG. 3 is a control representing a conditional wait. It indicates that the control of a trapezoid drive control block 2-20 is started when a trapezoid drive control 1-10 completes.

The setting of execution-wait in another script is accomplished by performing a description row linking operation, such as a tool button clicking or a selection from a menu on the screen, in such a state that both a condition wait control block and a motor operation stop control block are selected. (In this example, the linking is done as shown in FIG. 3 by, while depressing a Ctrl key, clicking on the control blocks 1-10 and 2-10 and clicking a predetermined link key.)

The description contents can be executed in two methods. In the first method, only a selected script is executed. In the second method, all description rows are executed.

If the execution of all scripts is designated, the control blocks in all the scripts are executed at a time. If the condition control wait block 2-10 of the condition wait is not provided as in the example of FIG. 3, both are executed at a time.

In the example shown in FIG. 3, the execution of the script at a first row is once placed in a wait state at the condition wait control block 1-20 that represents the condition wait. When a trapezoid drive control block 2-30 ends, the trapezoid drive control block 1-30 is executed.

The combination of various condition wait controls described above makes it easy for a larger number of actuators to describe the link operation.

The contents of the above-mentioned control block will be explained in more detail below.

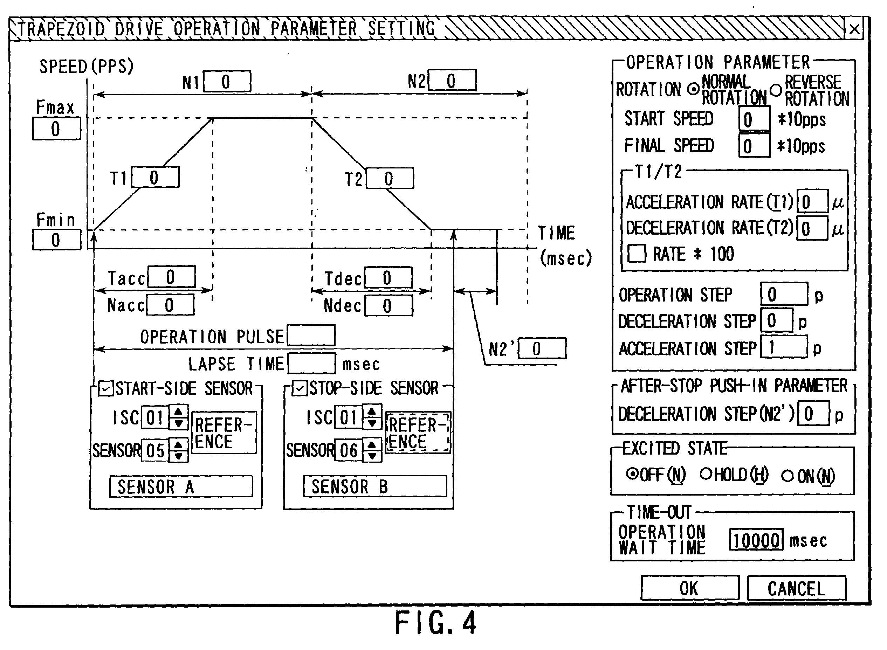

FIG. 4 shows, in detail, an example of an image screen for setting the trapezoid drive control blocks (1-10, etc.) shown in FIG. 3.

The image screen as shown in FIG. 4 is displayed by double clicking on the trapezoid drive control block (1-10, etc.) displayed on the image screen of FIG. 3. Setting items are displayed, as operation parameters, on the screen. Among the setting items are: rotation direction, start, final speed, acceleration/deceleration rates, operation step number. Other items of setting sensors at a start position and a stop position are also displayed on the screen.

The check box under items of a start-side sensor and stop-side sensor represents "effective/ineffective" of each sensor. When the start-side sensor is set "effective", check is made to determine whether or not a designated sensor position has been set at the time of starting the operation. If the position is not properly set, an "error" display is made on the image screen, and a control sequence is stopped.

When the stop side sensor is set effective, the monitoring of a designated sensor is effected during the operation of the motor. When the sensor is turned ON, the motor is stopped. To prevent, at this time, the motor being displaced from the stop position due to a backlash, etc., of a mechanism, an involved operation is continued after the turning ON of the sensor, to an extent corresponding to several steps set by an "after-stop push-in parameter."

If the stop-side sensor is ineffective, the motor keeps operating to an extent corresponding to the steps of the operation set independently of the state of the sensor.

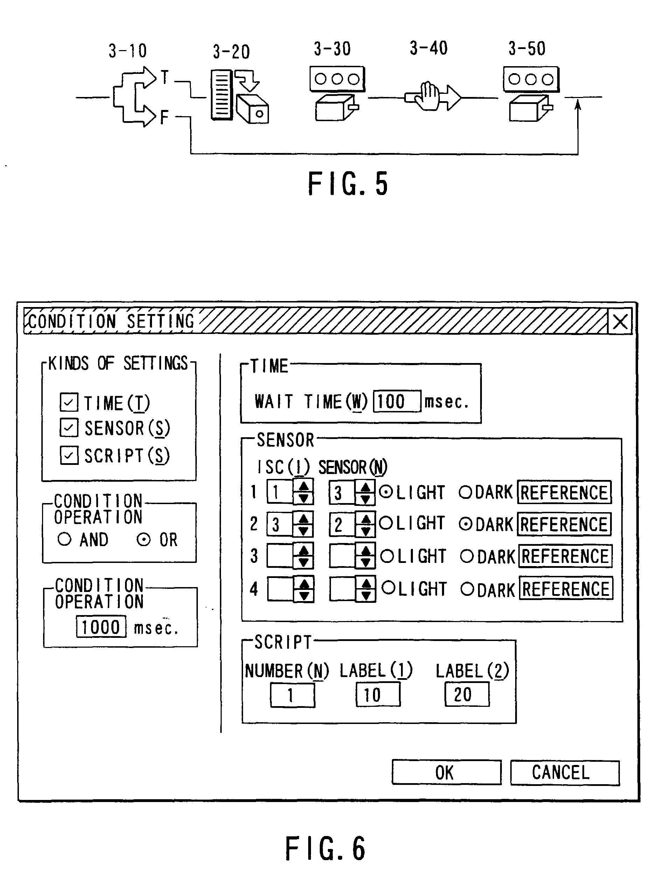

The trapezoid drive control block described above is realized as a combination of a plurality of control blocks as shown in FIG. 5.

In FIG. 5, the reference numeral 3-10 represents a condition branch control block as will be set out in more detail below and checks the start-side sensor. The reference numeral 3-20 denotes a motor parameter setting control for setting the stepping motor operation parameter (speed, acceleration/deceleration rate, operation step number, etc.) to a motor controller. The reference numeral 3-30 designates a motor operation start control block for starting a motor. The reference numeral 3-40 represents a condition wait control block, which will be described later. This control remains in a wait state until the stop-side sensor is turned ON. The reference numeral 3-50 designates a motor operation stop control block for stopping the motor.

FIG. 6 shows, in detail, an example of a setting image screen of the condition wait control block used in the condition control block 1-20, etc., illustrated in FIG. 3.

The item "kinds-of-settings" shown in FIG. 6 sets the kinds of conditions.

The kinds of setting to be selected are: "time", "sensor" and "script." If a wait is made until all these conditions are met, the item "condition operation" will be made an operation "AND." If any of these conditions is satisfied, the item "condition operation" will be made an operation "OR."

In this example, all the "time", "sensor" and "script" are made an OR condition. Hence, the condition will be satisfied and the operation goes to the next control if a time "100 msec" lapses, if a sensor 1-3 is "light" and sensor 3-2 is "dark," or if the execution of a first row completes a control block 1-10.

The setting of the script wait is accomplished by performing a description row linking operation (button clicking or selection from the menu on the screen) in the state that both the condition wait control block and a control block which is desired are selected.

By this operation, the number of an automatically selected control block is input to the item of the script on the condition wait control block setting image screen.

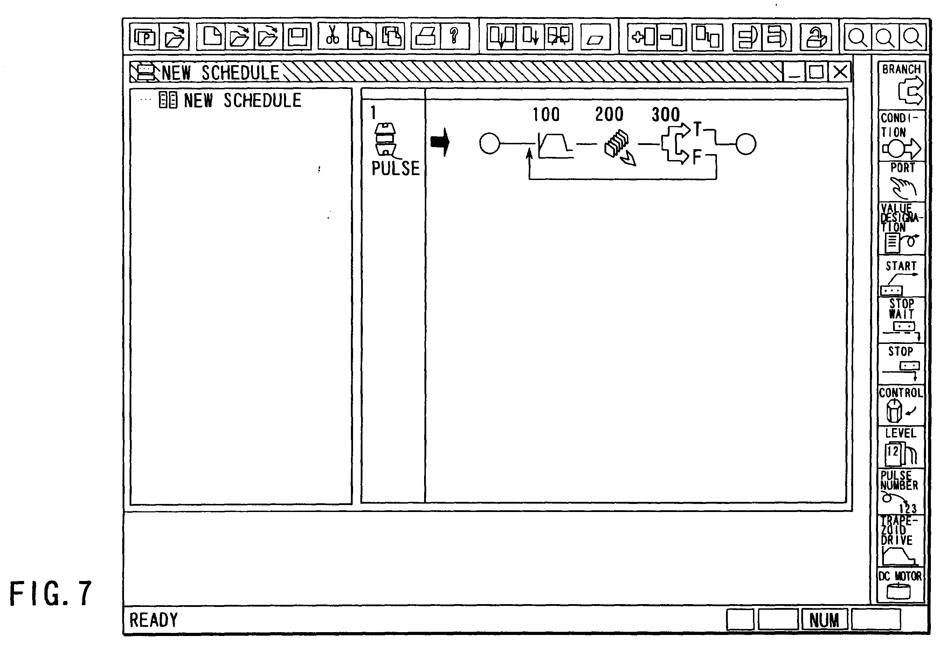

FIG. 7 shows a use of a condition branch control block as will be explained below.

In this example, a stepping motor operation of a trapezoid drive control block 100 is performed and an output port operation control block 200 is carried out. Then, the involved operation is terminated when the condition is met in the condition branch control block 300, and the trapezoid drive control block 100 is implemented again when the condition is not met.

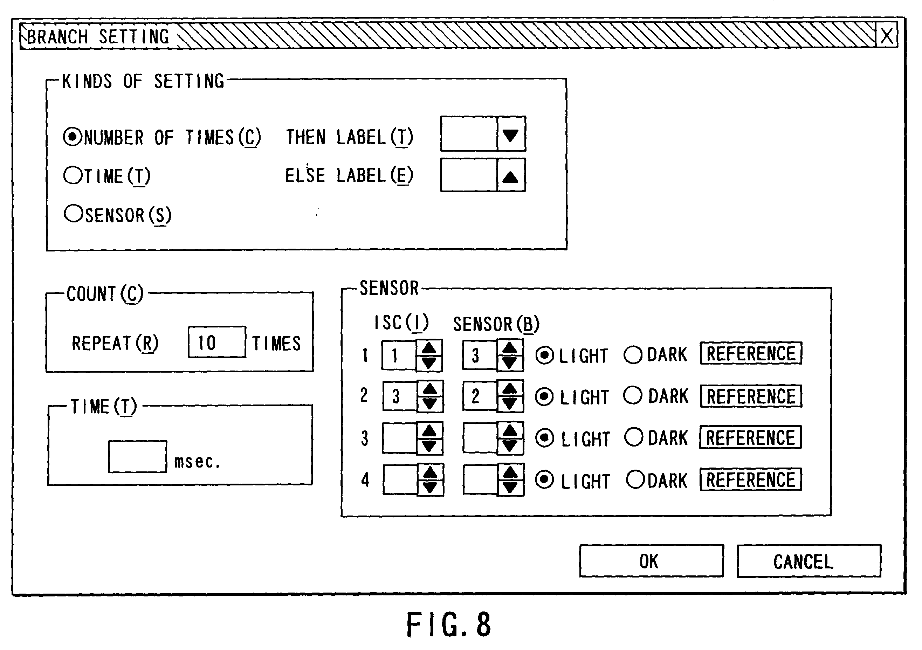

FIG. 8 shows a setting image screen of the condition branch control block described above. It is possible to select the branch condition from the sensors.

In the case where, the condition is met and condition is not met in the items "THEN" and "ELSE", a control block to be next performed is designated. Here, the number of a control block or "head" and "end" can be designated In this example, the number of times is conditional. If the number is "10," the condition is met and a result is an "end." Otherwise, a "head" is involved, in which case an operation is performed such that the description is repeated 10 times from the "head."

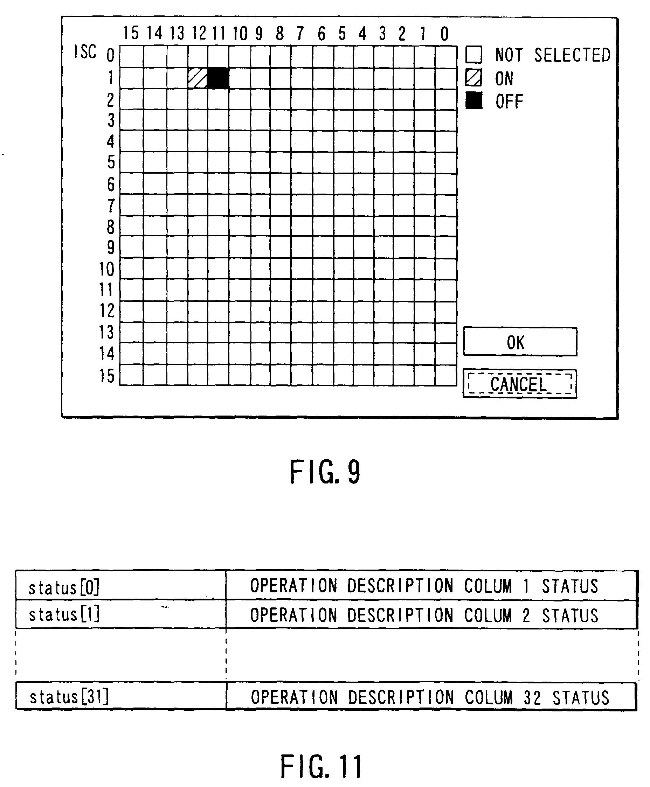

FIG. 9 shows a setting image screen of the output port operation control block (1-20, etc.) shown in FIG. 7. This screen will be explained below.

As shown in FIG. 9, a matrix of unit control section addresses and port numbers in the unit control section enables any port to be ON/OFF designated on this image setting screen. Note that the ISC on the ordinate indicates the number of the unit control section and that the abscissa indicates its port number. With this specification, it only needs to make, at a setting time, the mouse clicking at any desired place and to release the selection of the place by making the same mouse clicking again.

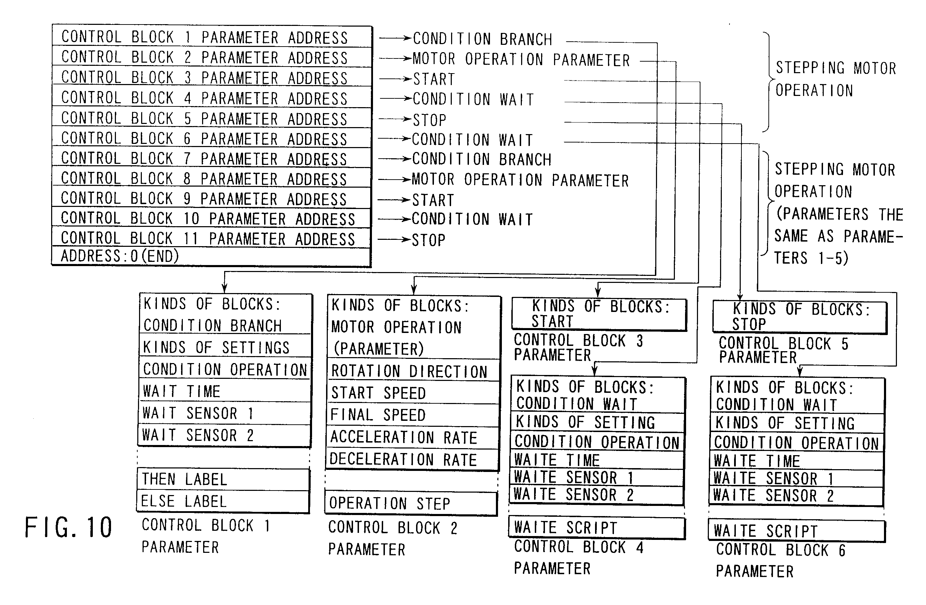

FIG. 10 shows a control retaining structure. A method of effecting control in accordance with the above-mentioned description contents will be described in detail.

The control retaining structure is used in connection with the respective script displayed on the operation description image screen of FIG. 3. That is, the control retaining structures shown in FIG. 10 are provided in the same number as or a greater number than the scripts.

A parameter address table retains the addresses of control parameters corresponding to respective controls in a description order of the script. That is, FIG. 10 corresponds to a description example of the script at the first row in FIG. 3. The first to fifth control parameters are parameters of stepping motor operation control blocks. The sixth control parameter is a parameter of a condition wait control block. The seventh to eleventh control block parameters are parameters of the stepping motor operation control blocks.

Control blocks are effected by sequentially performing processing corresponding to the controls described at the respective script in accordance with the parameters shown in FIG. 10.

The number of an executing control in the respective script is retained in a operation description column status array "status []." When one control block is completely performed, the number of the next control block is written into the status []. The control blocks are thereby performed sequentially. The status [0] corresponds to a script "1", the status [1] corresponds to a script "2", and so forth.

The operation of the mechanism control system of the present invention will be explained below.

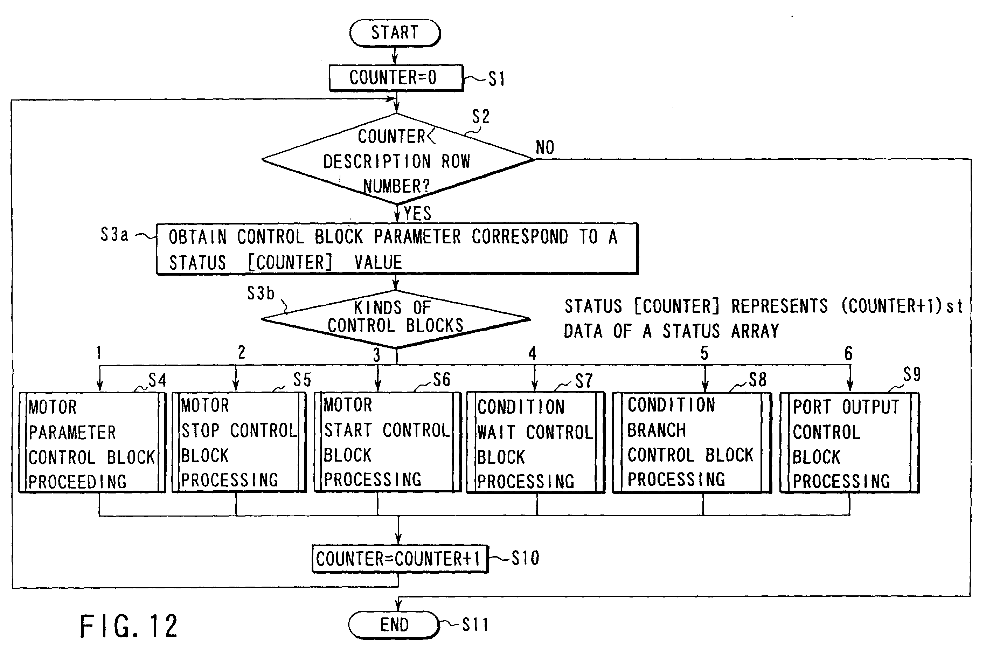

FIG. 12 is a flowchart showing the processing of the entire operation description.

The entire operation description is processed once in a predetermined time (1 ms in this embodiment). For all the script, processing is performed on the executing control blocks.

When an operation is started, a counter is cleared to 0 (step S1). It is then determined whether or not processing is performed on all the described script (step S2).

If the processing is not performed on all script, the status value of the script corresponding to the counter value is obtained. Then, various kinds of processing corresponding to the control block parameter corresponding to that value are performed (steps S3 to S9) and these are repeated (step S10). If the processing on all the script is completed, the operation is ended (step S11).

The contents of processing on the respective control blocks will be described.

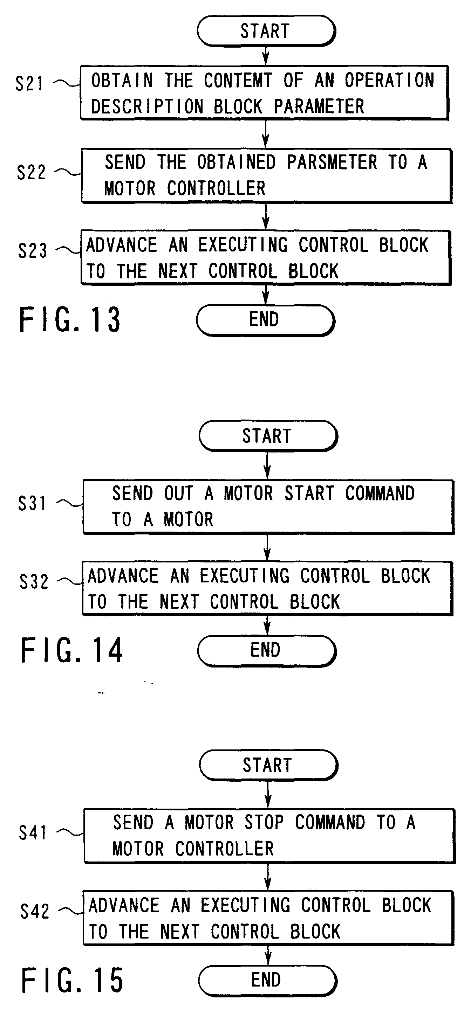

FIG. 13 is a flowchart showing the control block for setting motor operation parameters, which is performed in step S4.

If the control being executed is a motor operation parameter setting control block, a motor operation parameter described in the control parameter is sent to the motor controller (steps S21, S22). The value of the executing control (status) is thereby advanced to the next control block (step S23). By doing so, the next control block is implemented in the next operation description entire processing.

FIG. 14 is a flowchart showing how the motor operation start control block is performed at step S6 above.

If the control being executed is a motor operation start control block, a motor start command is sent to the motor controller (step S31). The value of an executing control (status) is thereby advanced to the next control block (step S32). By doing so, the next control block is implemented in the next operation description entire processing.

FIG. 15 is a flowchart showing how a motor operation stop wait control block is performed in step S5.

If the block being executed is a motor operation stop wait control, a motor stop command is set to the motor controller (step S41). The value of the executing control (status) is thereby advanced to the next control block (step S42). The next control block is thereby implemented in the next operation description entire processing.

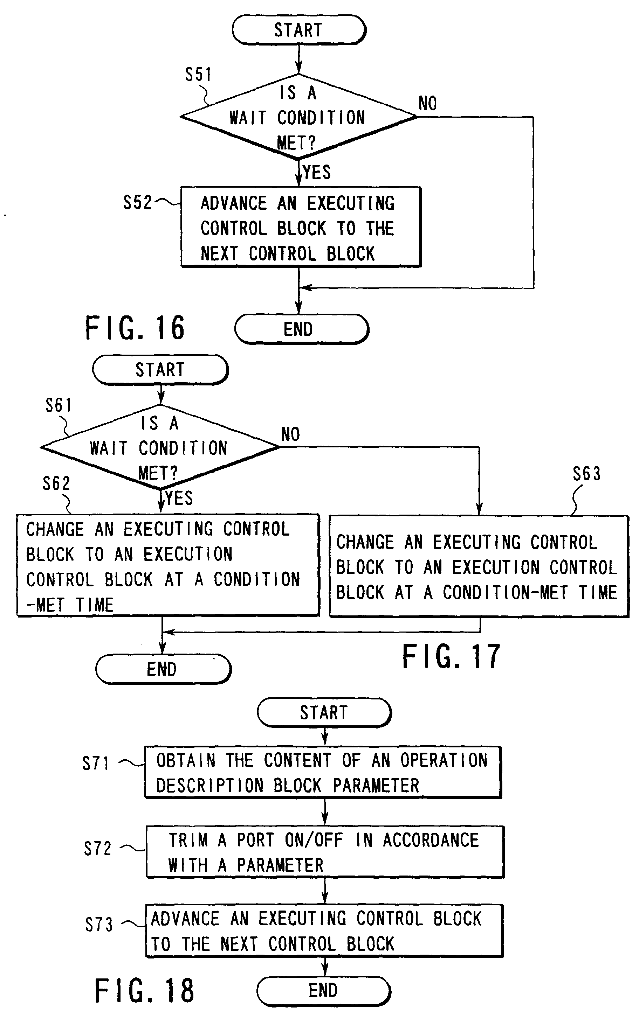

FIG. 16 is a flowchart illustrating how the condition wait control block is performed in step S7.

If the executing block is a condition wait control, the wait condition set as a parameter is checked (step S51). If the wait condition is met, the value of the executing control (status) is advanced to the next control block. If the wait condition is not met, the value of the executing control (status) is not varied (step S52). The operation of a wait for the condition to be met is realized.

FIG. 17 is a flowchart explaining how a condition branch control block is performed in step S8 described above.

If the executing block is the condition branch control, the branch condition set as a parameter is checked (step S61). If the branch condition is met, the value of the executing control (status) is changed to a designation control (THEN condition in FIG. 8) at the condition-met time (step S62). If the wait condition is not met, the value of the executing control block (status) is changed to a designation control block (ELSE condition in FIG. 8) at the condition-met time (step S63). The next executing block can thereby switched in accordance with the condition.

FIG. 18 is a flowchart showing how an output port operation control block is performed in step S9.

If the control being executed is an output port operation control, the content of the control parameter is obtained (step S71). Then, the port ON/OFF is performed in accordance with the parameter (step S72). The control is thereby advanced to the next control block (step S73). By doing so, the port ON/OFF control operation is realized.

According to the present invention, a mechanism control system and its developing method can be provided, which can, as described above, easily describe the operations of the mechanism and perform them simply by arranging operation representing blocks on the image screen.

## Claims

1. A mechanism control system for controlling the operation of a to-be-controlled mechanism in a predetermined sequence, characterized by comprising:
display means (10) for displaying a predetermined operation image screen;
operation designating means (11) for selecting a desired control element from predefined control elements of the mechanism on the operation image screen of the display means and representing a control sequence of the mechanism; and
control means (2) for controlling the operation of the mechanism on the basis of the control sequence.

2. In a mechanism control system according to claim 1, said operation designating means (11) characterized by further comprising:
selecting means for selecting elements in the mechanism;
designating means for designating control contents of the elements selected by the selecting means;
parameter inputting means for inputting predetermined parameters so as to designate a detail of the control contents designated by the designating means; and
said control means (2) further comprising means (13, 14) for operating the elements which are selected by the selecting means on the basis of the control contents designated by the designating means and parameters input from the parameter inputting means.

3. In a mechanism control system according to claim 2, said operation designating means (11) characterized by further comprising link operation designating means for designating element-to-element link operation contents; and
said control means (2) further comprising means (13, 14) for operating the elements which are selected by the selecting means on the basis of the control contents designated by the designating means, parameter input from the parameter inputting means and link operation contents designated by the link operation designating means.

4. A mechanism control system for controlling the operation of a to-be-controlled mechanism in a predetermined control sequence, characterized by comprising:
block column structuring means (2, 11) for selecting desired blocks from a plurality of control blocks and structuring a block column;
designating means (11) for designating control contents of the control blocks; and
state retaining means (12) for retaining a control block to be executed in the block column, wherein
the control content corresponding to a control block in the block column which is retained in the state retaining means is implemented and, by changing a retained control block to be implemented in the state retaining means in accordance with a result of implementation, a desired control sequence is performed.

5. A mechanism control system according to claim 4, characterized by further comprising:
state retaining means (11) for retaining a control block to be implemented in the block column, wherein said control content corresponding to the control block retained in the state retaining means which is present in the block column is implemented and, by changing the control block to be implemented which is retained in the state retaining means in accordance with a result of the implementation while based on the link operation content designated by the link operation designating means, a desired control sequence is performed.

6. A method for developing a mechanism control system for controlling the operation of a to-be-controlled mechanism in a predetermined control sequence, characterized by comprising the steps of:
displaying a predetermined operation image screen;
selecting desired elements from control elements in the mechanism which are predefined as blocks on the predetermined operation image screen, structuring a block column by doing so and representing a control sequence of the mechanism; and
controlling the operation of the mechanism on the basis of the control sequence.

7. A method for developing a mechanism control system for controlling the operation of a to-be-controlled mechanism in a predetermined control sequence, characterized by comprising the steps of:
selecting elements of the mechanism;
designating control contents of the selected elements;
inputting predetermined parameters for designating a detail of the designated control contents; and
generating a control sequence for operating the selected elements of the mechanism on the basis of the designated control contents and parameters.

8. A method for developing a mechanism control system according to claim 7, characterized by further comprising the steps of:
designating an element-to-element link operation content; and
generating a control sequence for operating the selected elements in the mechanism on the basis of the designated control contents and parameters.

9. A method for developing a mechanism control system for controlling the operation of a to-be-controlled mechanism in a predetermined control sequence, characterized by comprising the steps of:
selecting desired control blocks from a plurality of control blocks and structuring a block column;
designating the control contents of the control blocks;
retaining the control block to be implemented in the block column; and,
by implementing the control content corresponding to the retained control block in the block column and changing the retained control block to be implemented in accordance with a result of the implementation, generating a control sequence for performing a desired operation.

10. A method for developing a mechanism control system according to claim 9, characterized by further comprising the steps of:
designating the control contents of the control blocks;
retaining a control block to be implemented in the block column; and,
by implementing the control content corresponding to the retained control block in the block column and changing the retained control block in accordance with a result of the implementation while based on the designated link operation content, generating a control sequence for performing a desired operation.
